# EUROPEAN PATENT APPLICATION

(11) **EP 1 209 785 A1**
(43) Date of publication of application: **29.05.2002**
(21) Application number: 01660215.3
(22) Date of filing: 21.11.2001
(51) Int. Cl.: H02G 3/08, H02G 3/12

(54) **Mounting box for wiring accessories**

(30) Priority: 24.11.2000 FI 20002583
(71) Applicant: Ensto Busch-Jaeger Oy, Porvoo 06100 (FI)
(72) Inventor: Keskinen, Esko, 06150 Porvoo (FI); Fagerström, Erik, 00940 Helsinki (FI); Didriksson, Lars, 06100 Porvoo (FI)
(74) Representative: LEITZINGER OY

(57) **Abstract**

The invention relates to a mounting box for wiring accessories. The mounting box comprises a base (1), two opposite side walls (2), fastening means (3) projecting from the base and/or side walls, to which the wiring accessories can be fastened, and gripping projections (4, 5) on the upper edges of the side walls, by means of which the mounting box can be fastened on the edges of the installation opening (26, 26') of a wire or cable duct trunking or other frame casing. The mounting box is comprised of mounting box modules (10), at opposite ends of which are coupling means (11, 12), which form a shape-locked coupling with the coupling means (11, 12) of another mounting box module, in such a way that the mounting box can be infinitely extended by means of mounting box modules (10) up to the desired number of modules. Thus, accessories prefabricated for desired assemblies can be installed in a continuous installation space comprised of mounting box modules (10) connected in succession.

## Description

The invention relates to a mounting box for wiring accessories as disclosed in the preamble of claim 1. It is known to install a desired number of separate wiring accessory boxes in succession by using connecting joints between the boxes. In such a case, the wiring accessories must be installed separately in each box. It is also known to manufacture boxes with several wiring accessories, in which can be installed a predetermined number of ready-made or assembled wiring accessories. As the needs for electrical connections increase and diversify, these known solutions are no longer sufficient or satisfactory. Especially in wire or cable duct trunking installations, it is necessary to select an arbitrary, sometimes a quite considerable number of different wiring accessories, such as sockets, switches and tele- and data-connection boxes next to each other. In addition, modern construction engineering with movable modular walls presents its own limitations on electric wiring and the locations for fixing electric boxes.

The aim of the invention is to provide the type of mounting box for wiring accessories, which box will be easily adaptable to different installation sites, and that in it can be easily installed a desired number of wiring accessories.

This aim is achieved on the basis of the characteristics disclosed in the appended claim 1.

The invention is illustrated in the following by means of examples, with reference to the accompanying drawings, in which
- Figures 1A and 1B: show a combination of mounting boxes according to one embodiment of the invention as a perspective view diagonally from above and as seen from the bottom side.
- Figures 2A and 2B: show two different mounting box modules, which belong to the mounting box combination shown in Figure 1A.

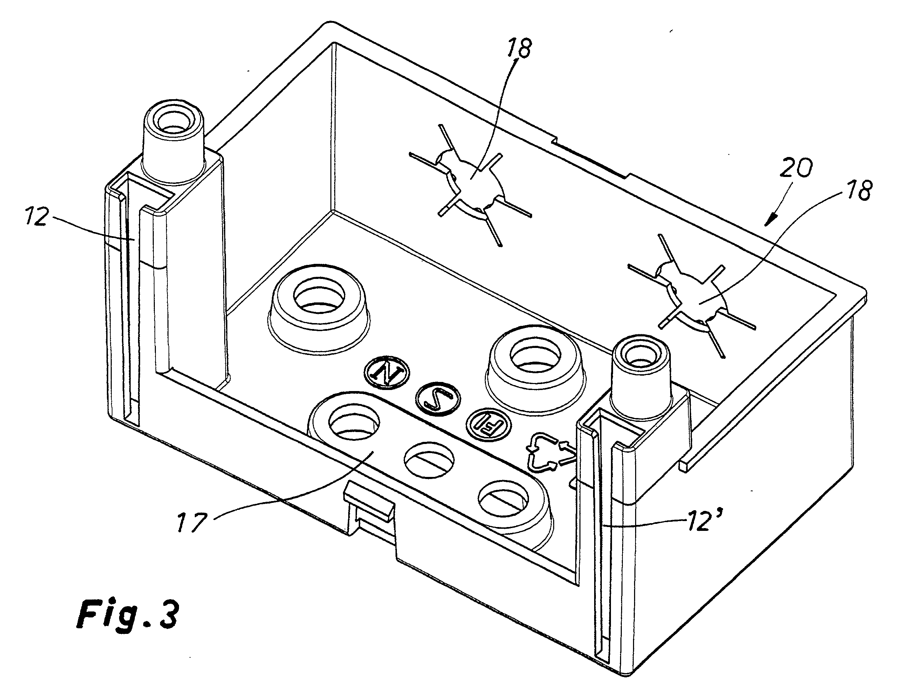

- Figure 3: shows an end module provided with a connection space, which is comprised in the mounting box combination shown in Figure 1.

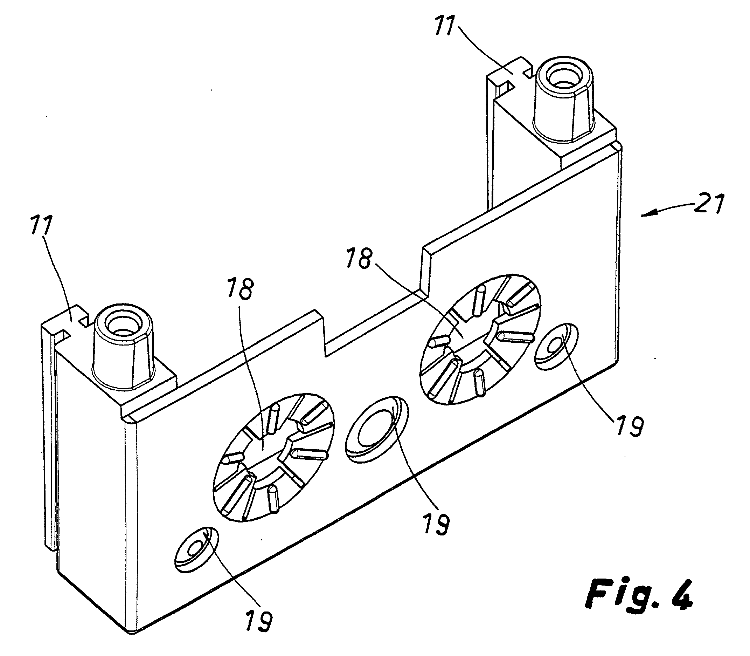

- Figure 4: shows another end module comprised in the mounting box combination shown in Figure 1.
- Figures 5A and 5B: show a covering plate for a dual socket, which covers one mounting box module.
- Figures 6A and 6B: show a covering plate for covering one mounting box module, which is suitable for a switch and weak current products.

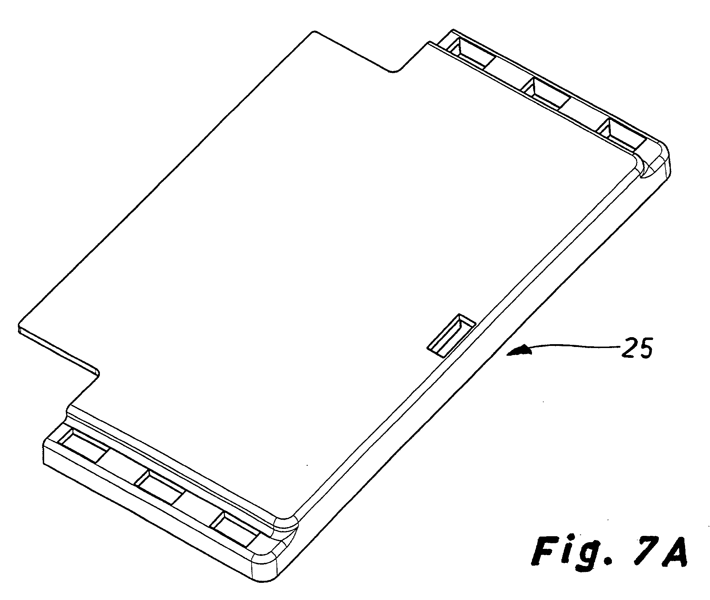

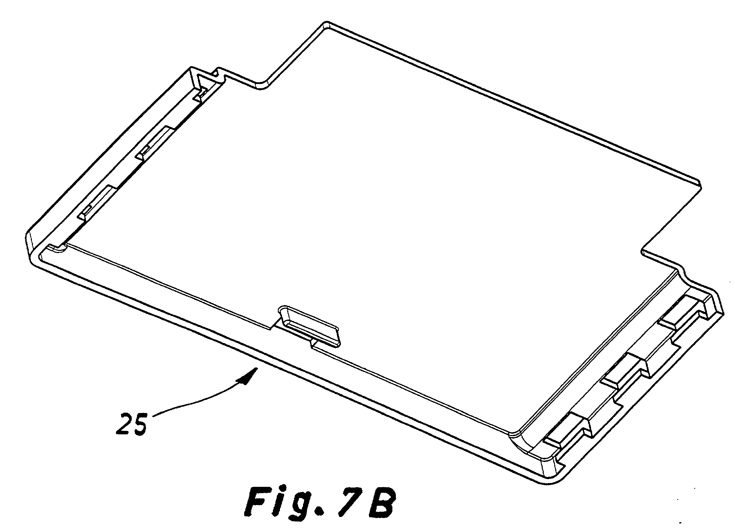

- Figures 7A and 7B: show a covering plate of an end module as shown in Figure 3, which functions as a moisture barrier for the connection space.
- Figure 8: shows a ready-assembled mounting box installed in place in a wire or cable duct trunking 35, which is shown in cross section.
- Figure 9: shows a cross section of a ready-assembled mounting box installed in place in the wire or cable duct 35.
- Figure 10: shows an assembly view of an opening 26a in a mounting base 28 into which is installed a frame casing 31, in which is in turn installed the ready-assembled mounting box 30 relating to the invention.
- Figure 11: shows a frame casing 32 arranged in conjunction with a wire or cable duct, a cable rack, a light fitting, or other fixture 33, into which the ready-assembled mounting box 30 relating to the invention with its fixtures can be installed.
- Figure 12: shows a piece of furniture, such as a conference table 34, in the installation opening 26' of which a ready-assembled mounting box 30 relating to the invention with its fixtures can be installed.

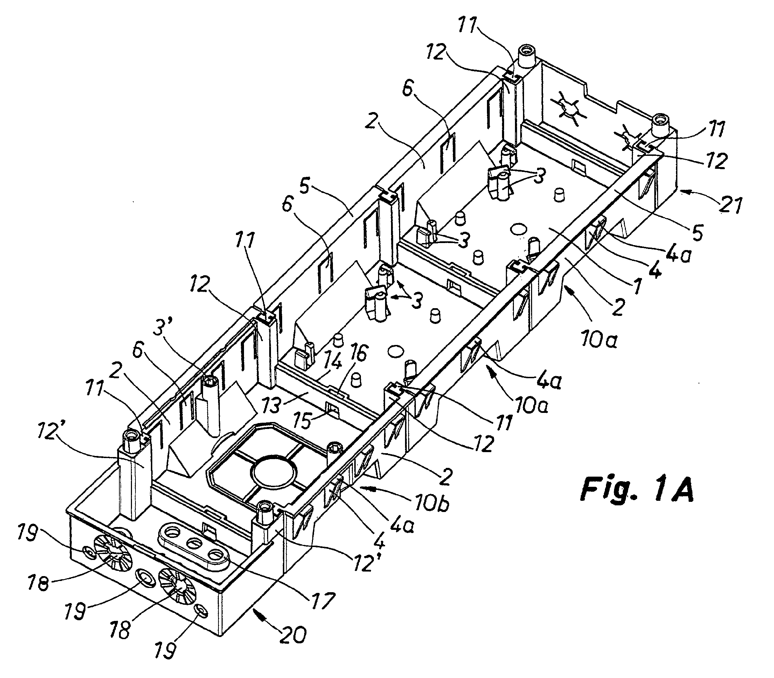

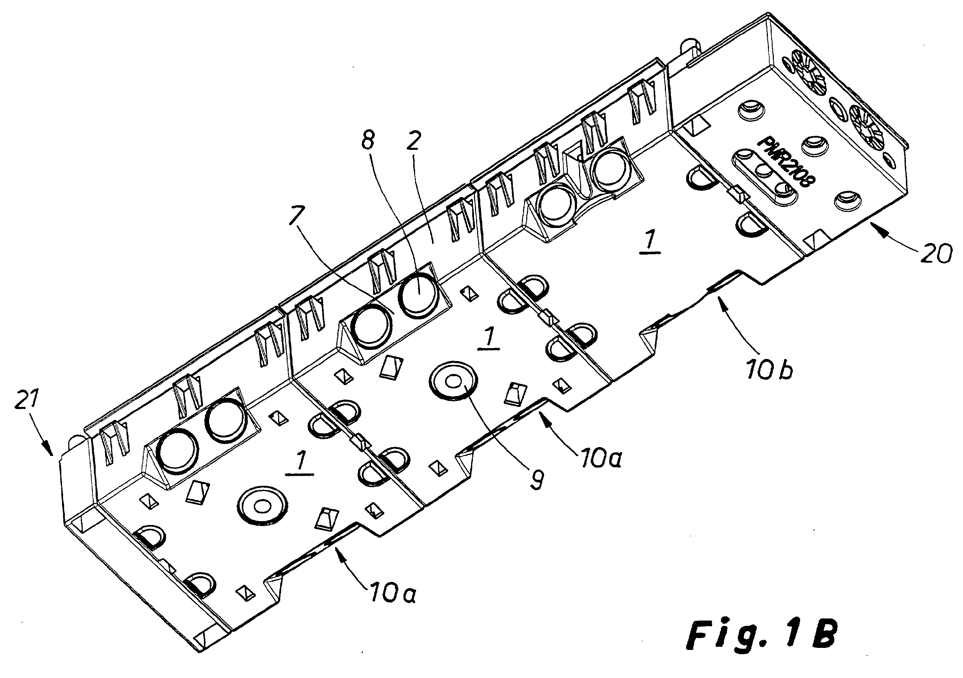

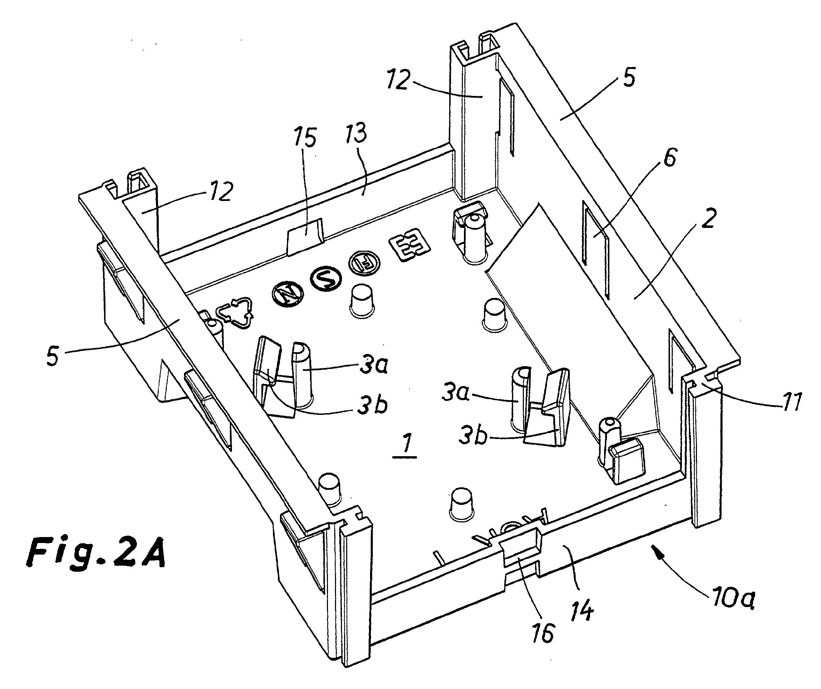

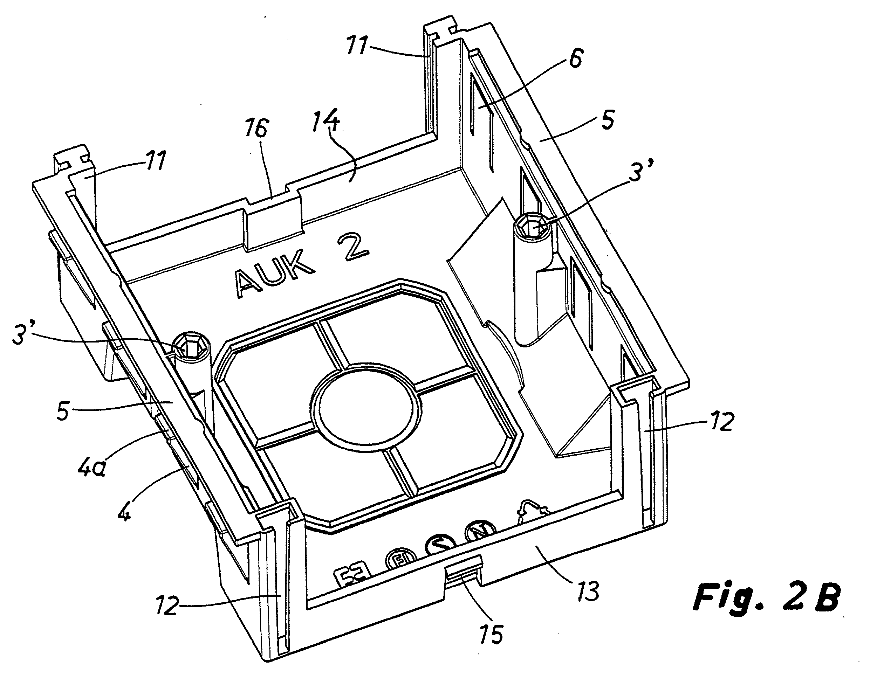

The basic structure of the mounting box is described first, with reference to Figures 1 and 2. The box comprises a base 1 and two opposite side walls 2. From the base and/or side walls project fastening means 3, to which the wiring accessories can be fastened. Such wiring accessories include sockets, switches, push-buttons and knobs, which are used for distribution and control of electricity in offices, homes, and other premises. The box relating to the invention is also intended for various weak current devices used for telecommunication and data transmission.

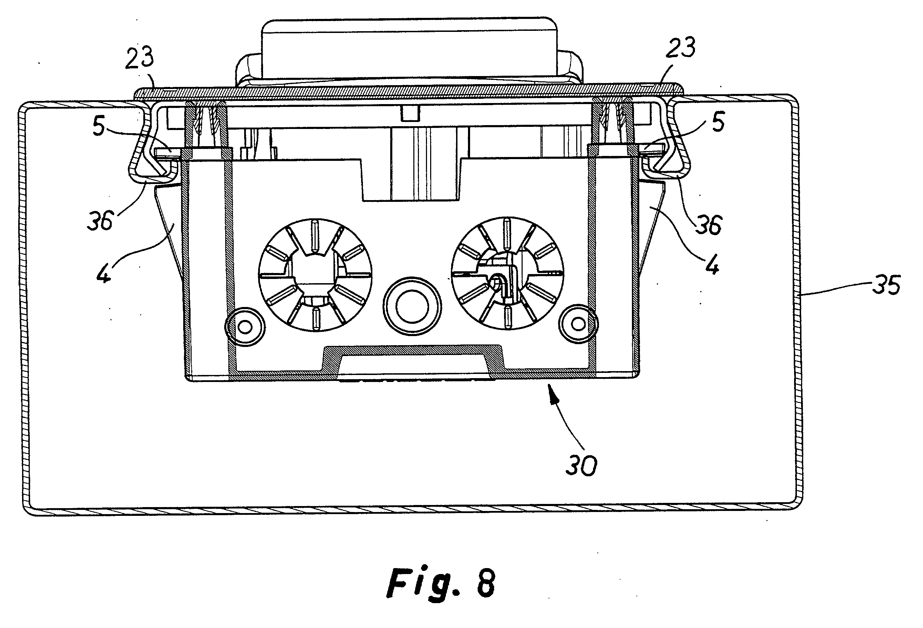

On the upper edges of the side walls 2 are gripping projections 4, 5 by means of which the mounting box can be fastened on the edges of the installation opening of a wire or cable duct or other frame casing. In the case described, the gripping projections comprise lugs 4 protruding in a wedge-like manner, the said lugs being incorporated in the flexible tongues 6 of the side walls 2 and forming protruding stopper surfaces 4a in the vicinity of the free ends of the tongues 6. On the upper edges of the side walls 2 are flanges 5, which are at a short distance from the stopper surfaces 4a of the lugs 4. Figures 8 to 12 show how the edges of the installation opening 26, 26' of the wire or cable duct 35 or other frame casing 31 are provided with formed grips 36 or a gripping rail 27 which can be made to grip between the flanges 5 and the stopper surfaces 4a, when the ready-assembled box 30 is pushed into the installation opening 26, 26'.

The mounting box relating to the invention consists of mounting box modules 10. In the example shown in Figure 1 there are two different designs 10a, 10b of mounting box modules which differ from each other with respect to the fastening means 3, 3' of the wiring accessories. The mounting box modules 10a are intended for delivery of current and the fastening means are comprised, in the manner shown in Figure 2A, of semicircular pegs 3a and hook-shaped columns 3a adjacent to them, which form a snap joint with the gripping projections of the wiring accessory installed in the box. The mounting box module 10b is intended for accessories used in telecommunication and data communication and it is provided with screw-fastening columns 3', which are located adjacent to the side walls 2. In addition to this, or as an alternative to the module 10b, it is advantageous to make appropriately designed adapters, which can be fastened to the fastening means 3 of the modules 10a, the design and fastening means of the adapters corresponding to various weak current products used in telecommunication and data communication.

At the first end of each mounting box module are first coupling means 11 and at the other end second coupling means 12, which form a shape-locked coupling with the first coupling means 11 of the second mounting box module 10. Due to these coupling means, the mounting box can be infinitely extended by using mounting box modules 10. The ends of the mounting box modules 10 are open at the top, which means that mounting box modules connected in succession form a continuous installation space in which can be installed wiring accessories prefabricated for desired assemblies, or the accessories can be wired at the installation site. The prefabrication or pre-installation of wiring accessory assemblies can be carried out either at the manufacturing plant or at the installation site. For the latter pre-installation method the wiring accessories may be equipped with plug-type connectors, by means of which a desired number of accessories can be connected as direct extensions of each other. The connectors should have contacts for both electric power and data leading-through.

At the ends of the mounting box modules 10, close to the base 1, are low, threshold-type end walls 13, 14, the height of which is less than half the height of the side walls 2. In the end walls 13, 14 are locking means 15, 16 which attach to each other by means of a snap joint and lock the mounting box modules on the same level. This snap joint must be easy to open for the purpose of reuse and/or repositioning of the modules.

The coupling means 11, 12 at both ends of each mounting box module are vertical profiles at the ends of the side walls 2. The coupling means 11 at one end of the mounting box module 10 are comprised of T or H columns 11, and the coupling means at the other end of C columns 12, which are dimensioned to fit around the T cap or H branch of the T or H columns. Other types of profile designs may obviously also come into question, and the coupling means do not necessarily have to be vertical profiles, but they may also be comprised of hook-shaped gripping means which interlock by means of a snap joint when the ends of the mounting box modules are pushed against each other.

The combination of boxes shown in Figure 1 also comprises an end module 20, which is provided with coupling means 12', which form a shape-locked coupling with the coupling means 11 of the mounting box module 11. The end module 20 is provided with through holes 18 for electricity supply lines, the edges of the through holes being designed to act as strain-reliefs. Opening blanks 19 may be opened for leading in weak current wires. The end module 20 forms an installation space for the ends of the wires led into the box. To the fastening base 17 provided with screw holes can be fixed, for example, a connector bar.

At the other end of the mounting box combination is an end module 21 which forms an end wall, the end module being provided with coupling means 11 which form a shape-locked coupling with the coupling means 12 of the mounting box module 10. In the wall of the end module 21 may also be through holes or opening blanks designed to be strain-reliefs, in which case the wiring can, if necessary, be continued to the next mounting box, which is thus a combination of mounting boxes comprised of mounting box modules.

The mounting box relating to the invention is thus used as a means by which the wiring accessories installed in the box can be installed in place in various applications, examples of which are shown in Figures 8 to 12.

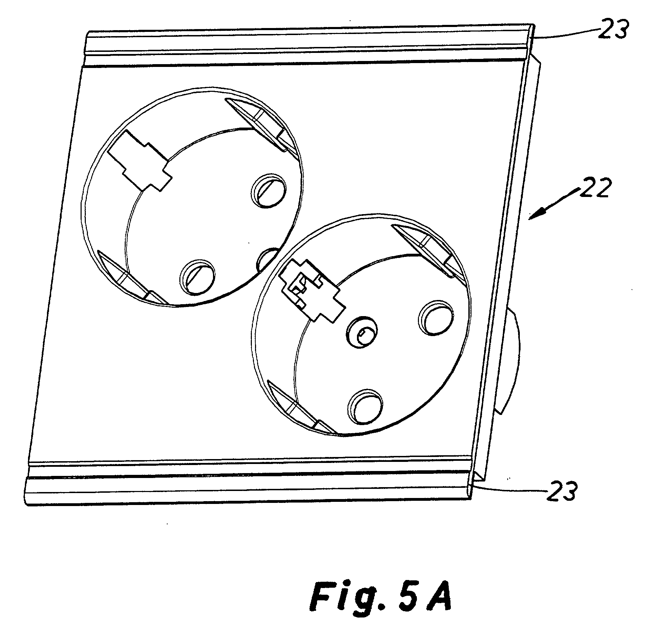

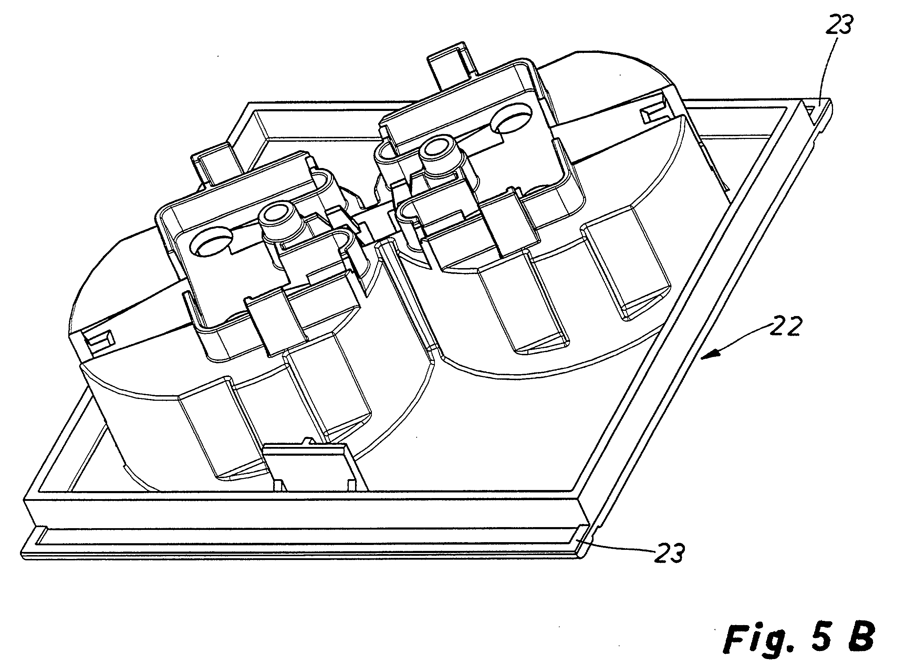

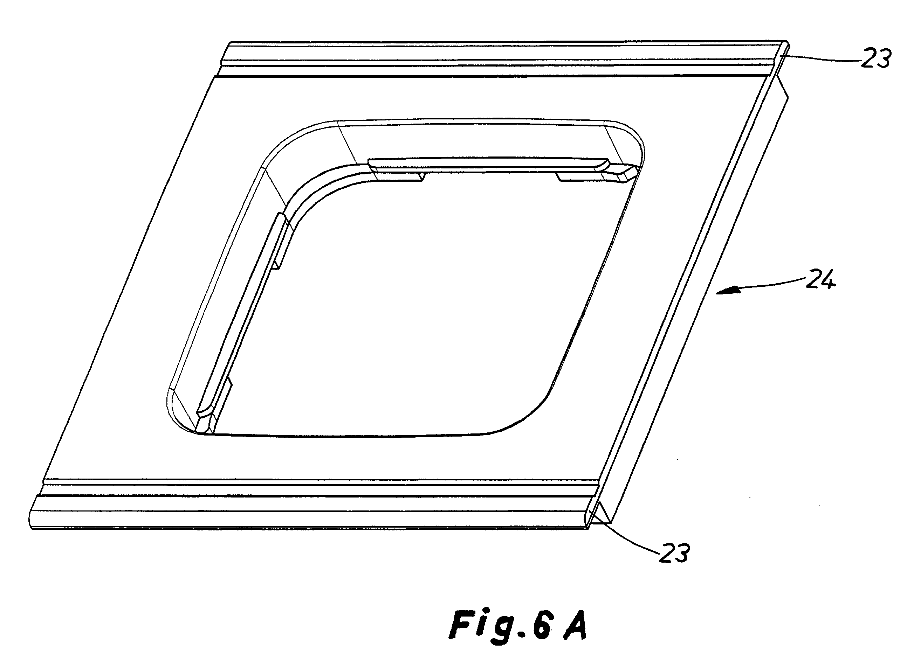

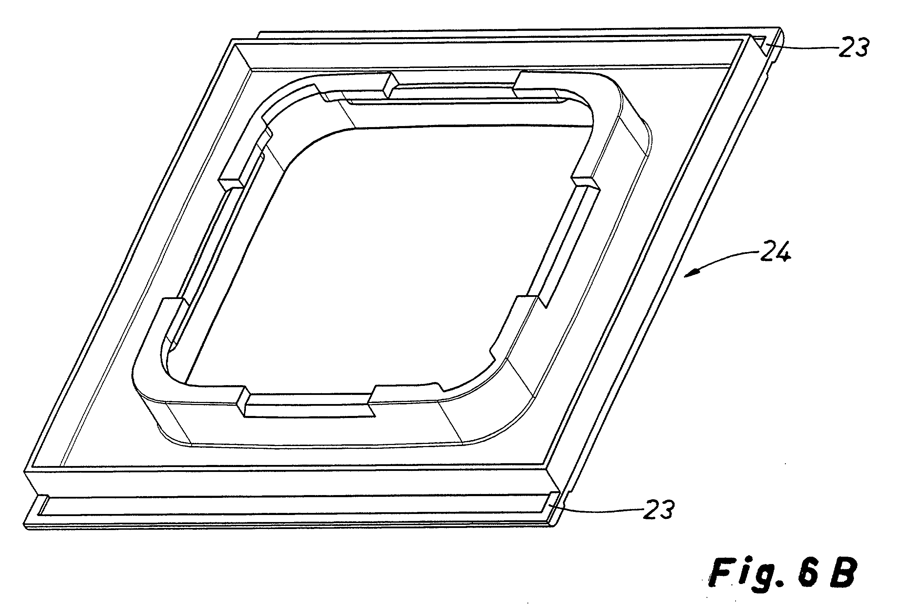

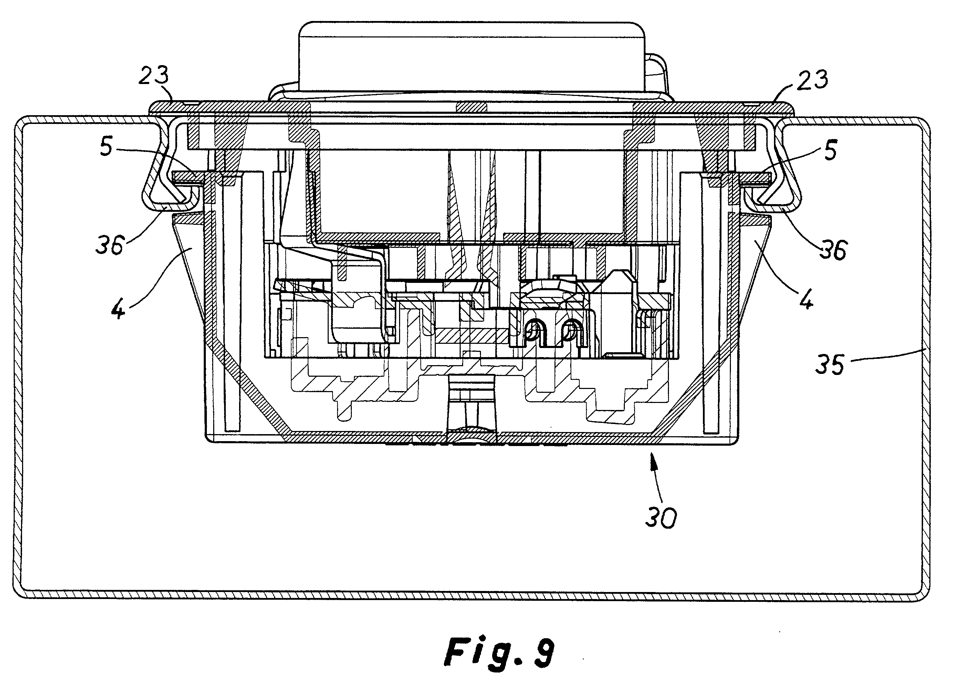

In Figures 8 and 9, the mounting box is fitted in an installation opening of a wire or cable duct trunking 35, on the edges of which are formed grips 36, which fit between the lugs 4 and the flanges 5. Once the lugs 4 have been attached to the flexible tongues 6, the ready-assembled mounting box combination 30 can be pushed in place in the installation opening of the wire or cable duct 35. The edges 23 of the covering plates 22 and 24 (shown in Figures 5 and 6) come immediately on top of the front surface of the wire or cable duct 35, whereby a low construction is achieved.

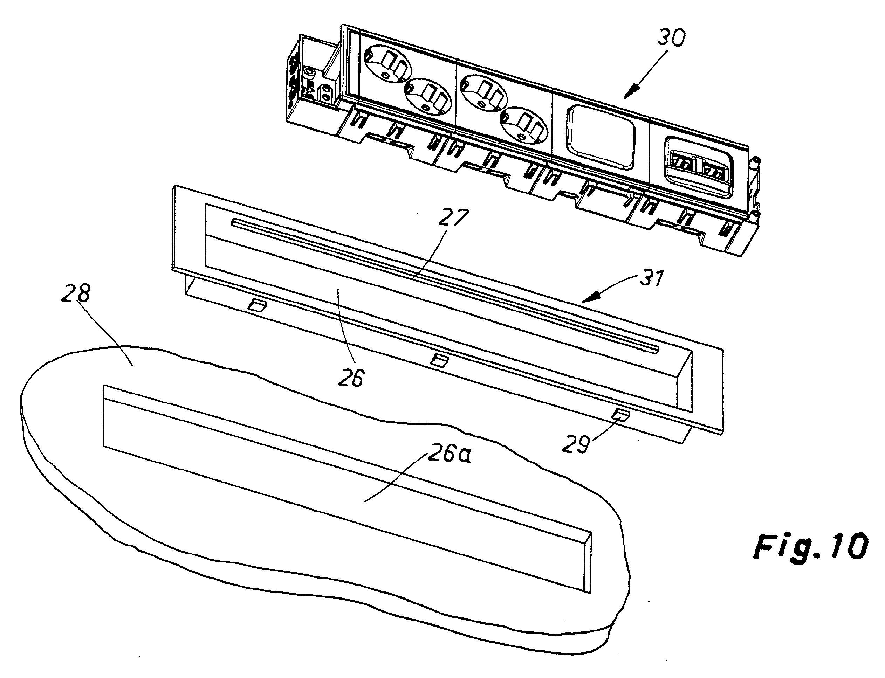

In the case of Figure 10, a frame casing 31 is installed in an opening 26a in a wall or other structure 28. The lugs 29 of the frame casing 31 grip behind the edges of an opening 26a made in the plate 28. On the edges of the installation opening 26 of the frame casing 31 are rails 27 which attach between the lugs 4 and flanges 5 of the mounting box 30, when the mounting box 30 is pushed into the installation opening 26.

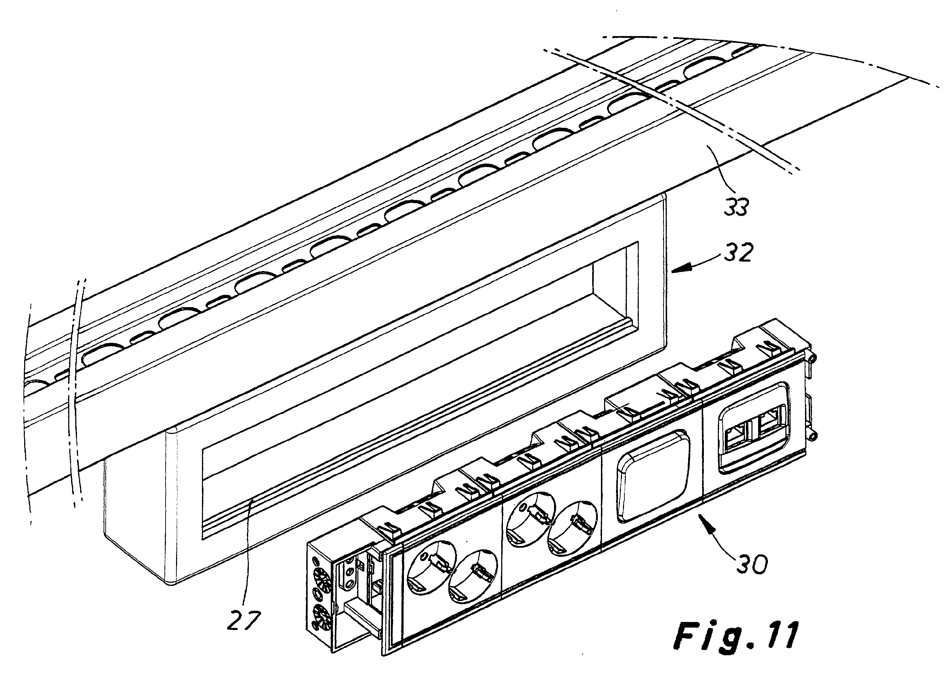

The application shown in Figure 11 differs from the application shown in Figure 10 in that the frame casing 32 is not embedded in the structure, but fixed as a protruding part in the wire or cable duct, cable rack, light fitting or other such fixture 33.

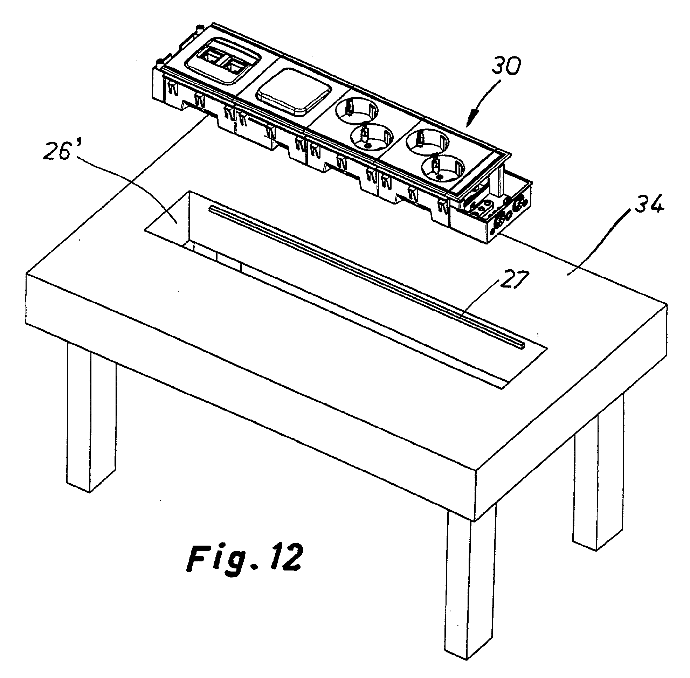

In the case of Figure 12, an installation recess 26' having fixing rails 27 on its edges has been made in a piece of furniture, such as a conference table 34. The installation recess 26' may be a fixed part of the fixture 34, but obviously also in this case, a separate frame casing 31 as shown in Figure 10 can be used.

The end pieces of the covering plates 22, 24 are fastened by pushing them into the pegs provided with holes in the end modules 20, 21.

The mounting box modules 10a, 10b are identical in length and width, which means that they can be positioned freely into desired combinations, the modular dimensions of which remain unchanged.

The mounting box relating to the invention makes possible a more versatile mounting/installation system than before, in respect of both applications of use and the manner of installation of the wiring accessories. The installation system is thus more universal and facilitates installation work in many ways.

## Claims

1. A mounting box for wiring accessories, the mounting box comprising
- a base (1);
- two opposite side walls (2);
- fastening means (3) projecting from the base and/or side walls, to which the wiring accessories can be fastened; and
- gripping projections (4, 5) on the upper edges of the side walls, by means of which the mounting box can be fastened on the edges of the installation opening (26, 26') of a wire or cable duct trunking (35) or other frame casing (31, 32),
**characterised in that** the mounting box is comprised of mounting box modules (10), and that at the first end of each mounting box module (10) are first coupling means (11) and at the other end second coupling means (12), which form a shape-locked coupling with the first coupling means (11) of the second mounting box module (10), whereby the mounting box can be infinitely extended by using mounting box modules (10).

2. A mounting box as claimed in claim 1, **characterised in that** the ends of the mounting box modules (10) are open at the top, which means that mounting box modules (10) connected in succession form a continuous installation space in which can be installed wiring accessories prefabricated for desired assemblies (30), or the wiring accessories can be wired at the installation site.

3. A mounting box as claimed in claim 1 or 2, **characterised in that** at the ends of the mounting box modules (10), close to the base (1), are low, threshold-type end walls (13, 14), the height of which is less than half the height of the side walls (2).

4. A mounting box as claimed in any of the claims 1 to 3, **characterised in that** the mounting box comprises a first end module (20) having lead-ins (16) and an installation space for wires led into the mounting box, and which is provided with coupling means (12'), which form a shape-locked coupling with the first coupling means (11) of the mounting box module (10), and a second end module (21) provided with coupling means (11), which form a shape-locked coupling with the second coupling means (12) of the mounting box module (10).

5. A mounting box as claimed in any of the claims 1 to 4, **characterised in that** the first and second coupling means (11, 12) are vertical profiles at the ends of the side walls (2).

6. A mounting box as claimed in claim 5, **characterised in that** the vertical profiles comprise a T or H column (11) and a C column (12), which is dimensioned to grip around a T cap or an H branch.

7. A mounting box as claimed in claim 6, **characterised in that** the first coupling means (11) are comprised of T or H columns 11 and the second coupling means (12) of C columns.

8. A mounting box as claimed in any of the claims 1 to 7, **characterised in that** there are at least two different designs (10a, 10b) of mounting box modules (10) which differ from each other with respect to the fastening means (3, 3') of the wiring accessories.

9. A mounting box as claimed in any of the claims 1 to 8, **characterised in that** the mounting box modules (10) are identical in length and width.

10. A mounting box as claimed in any of the claims 1 to 9, **characterised in that** the gripping projections comprise
- lugs (4) protruding in a wedge-like manner, the said lugs being incorporated in the flexible tongues (6) of the side walls (2) and forming protruding stopper surfaces (4a) in the vicinity of the free ends of the tongues (6); and
- flanges (5) on the upper edges of the side walls (2), which flanges are at a short distance from the stopper surfaces (4a) of the lugs;
and that the edges of the installation opening (26, 26') of the wire or cable duct trunking (35) or other frame casing (31, 32) are provided with formed grips (36) or a gripping rail (27), which can be made to grip between the flanges (5) and the stopper surfaces (4a), when the ready-assembled mounting box (30) is pushed into the installation opening (26, 26').

11. An installation system for wiring accessories, **characterised in that** the mounting box according to claim 1 is used with a varying number of mounting box modules (10) installed in a wire or cable duct trunking (35), in connection with a fixture (33), conference table (34), or other similar installation site.
